# FASCICULE DE BREVET EUROPEEN

(11) **EP 2 762 985 B1**
(45) Date de publication et mention de la délivrance du brevet: **04.04.2018**
(21) Numéro de dépôt: 13153885.2
(22) Date de dépôt: 04.02.2013
(51) Int. Cl.: G04C 3/06, F16C 39/06, G04B 1/16, G04B 17/28

(54) **Pivotement magnétique ou électrostatique de mobile d'horlogerie**
Magnetische oder elektrostatische Drehung eines drehbaren Bauteils einer Uhr
Magnetic or electrostatic pivot of a clock mobile

(43) Date de publication de la demande: 06.08.2014
(73) Titulaire: Montres Breguet SA, 1344 L'Abbaye (CH)
(72) Inventeur: Zaugg, Alain, 1347 Le Sentier (CH); Dauby, Sylvain, 1272 Genolier (CH); Junod, Benoît, 39220 Les Rousses (FR); Sarchi, Davide, 1020 Renens (CH)
(74) Mandataire: Giraud, Eric

(56) Documents cités:
- DE-A1- 2 136 371
- DE-A1- 3 940 769
- DE-B- 1 205 915
- FR-A- 1 276 204
- US-A1- 2003 137 901

## Description

### Domaine de l'invention

L'invention concerne un sous-ensemble horloger comportant d'une part un mobile horloger avec au moins une première surface périphérique annulaire de révolution autour d'un axe de pivotement dudit mobile, et d'autre part un dispositif de guidage en pivotement autour d'un axe théorique d'un mécanisme horloger.

L'invention concerne encore un mouvement d'horlogerie comportant au moins un tel sous-ensemble horloger.

L'invention concerne encore une montre comportant au moins un tel mouvement d'horlogerie ou/et comportant au moins un tel sous-ensemble horloger.

L'invention concerne encore une horloge comportant au moins un tel mouvement d'horlogerie ou/et comportant au moins un tel sous-ensemble horloger.

L'invention concerne le domaine du guidage en pivotement des mobiles d'horlogerie, et plus particulièrement le guidage des cages de tourbillon ou de carrousel.

### Arrière-plan de l'intention

Traditionnellement, les mobiles horlogers, et notamment les cages de tourbillon ou de carrousel, sont pivotés entre deux pierres portées par la platine du mouvement horloger.

Dans des exécutions particulières, les cages de tourbillon ou de carrousel peuvent être pivotées sur un roulement à billes. Une telle fabrication de tourbillon volant permet de diminuer, de façon conséquente, l'épaisseur de la cage de tourbillon, et par conséquent, l'épaisseur du mouvement. Toutefois, les frottements dans un tel roulement sont variables, en forte proportion du couple d'entraînement.

On connaît encore une cage de tourbillon pivotée sur trois paliers extérieurs, qui peuvent être des roulements à billes. Cette exécution est intéressante pour des questions d'encombrement de masse embarquée sur la cage. Les problèmes de frottements sont semblable à la version sur roulement, ces roulements sont plus petits, mais tournent plus vite et sont au nombre de trois.

Le document DE 21 36 371 A1 au nom de BRAUN décrit un palier magnétique comportant un arrangement d'aimants entre un boîtier et un arbre pour le maintien radial et axial de cet arbre. Les aimants portés par l'arbre et le boîtier peuvent être à champ axial ou radial, ou encore oblique.

Le document DE 12 05 915 B au nom de JUNGHANS décrit un guidage magnétique de balancier, avec un disque aimanté solidaire du balancier, ou constitué par sa serge, qui est mobile en rotation dans une entrefer entre des anneaux magnétiques disposés axialement de part et d'autre du disque de balancier.

Le document FR 1 276 204 A au nom de JUNGHANS décrit un anneau magnétique flottant autour de l'arbre d'un balancier, pour compenser les différences de frottement dans les pivots selon la position d'une montre. Dans une variante, une poussée axiale est transmise à un pivot par répulsion magnétique.

Le document DE 39 40 769 A1 au nom de NAT. SPACE DEV. AGENCY et de MITSUBISHI ELECTRIC CORP. décrit un dispositif de mise en lévitation d'un mobile, avec un détecteur de position d'un échantillon, à l'aide d'une source de puissance variable dont la tension de sortie varie en fonction des variations mesurées par le détecteur de position. Il comporte une paire d'électrodes planes, reliées chacune à une des deux bornes de la source de puissance variable, et positionnées à l'opposé l'une de l'autre, et une électrode en anneau. Le mobile est stationnaire dans un emplacement théorique, et le dispositif comporte des moyens pour faire tourner ce mobile stationnaire, notamment par l'application d'une tension continue au niveau d'une électrode.

Toutefois, aucun de ces documents ne décrit précisément l'agencement particulier des surfaces aimantées, ni l'agencement des champs et la répartition de ces champs au niveau d'un même interface.

### Résumé de l'invention

L'invention propose un pivotement de mobile horloger, notamment d'une cage de tourbillon ou de carrousel, ce pivotement se situant sur la périphérie du mobile ou de la cage, à proximité du diamètre extérieur, avec un dispositif dans lequel les frottements sont diminués, ou supprimés, et où l'utilisation de roulements n'est pas nécessaire.

A cet effet, pour une application à une pièce d'horlogerie statique, horloge ou pendule, l'invention concerne un sous-ensemble horloger selon la revendication 1.

Selon une caractéristique de l'invention, pour son application à une montre, ledit un mobile horloger comporte ladite première et une deuxième surfaces périphériques annulaires de révolution autour d'un même axe de pivotement dudit mobile et opposées l'une à l'autre de part et d'autre dudit mobile, et ladite deuxième surface périphérique est magnétisée ou électrisée, et ledit dispositif comporte, ou bien un deuxième anneau magnétisé ou respectivement électrisé, ou bien au moins trois deuxièmes surfaces magnétisées ou respectivement électrisées en opposition avec ladite deuxième surface périphérique de façon à la repousser au niveau d'un deuxième interface, lesdites deuxièmes surfaces étant disposées de façon régulière autour dudit axe théorique.

L'invention concerne encore un mouvement d'horlogerie comportant au moins un tel sous-ensemble horloger, caractérisé en ce qu'il comporte des moyens d'isolement ou de blindage de champ magnétique ou/et électrostatique autour dudit mobile et dudit dispositif de guidage en pivotement.

L'invention concerne encore une montre comportant au moins un tel mouvement d'horlogerie ou/et comportant au moins un tel sous-ensemble horloger, caractérisé en ce qu'elle comporte des moyens d'isolement ou de blindage de champ magnétique ou/et électrostatique autour dudit mobile et dudit dispositif de guidage en pivotement.

L'invention concerne encore une horloge comportant au moins un tel mouvement d'horlogerie ou/et comportant au moins un tel sous-ensemble horloger, caractérisé en ce qu'elle comporte des moyens d'isolement ou de blindage de champ magnétique ou/et électrostatique autour dudit mobile et dudit dispositif de guidage en pivotement.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et en perspective, un mobile horloger, dans le cas particulier et non limitatif d'une cage de tourbillon, maintenu en lévitation dans toutes les positions dans un dispositif de guidage en pivotement prévu pour une montre ;
- la figure 2 représente, de façon schématisée et en vue de dessus, l'ensemble de la figure 1 ;
- la figure 3 représente, de façon schématisée et en selon la section AA de la figure 2, le même ensemble, dans une réalisation particulière avec des anneaux magnétisés au-dessus et au-dessous du mobile horloger dans sa zone périphérique, et un dispositif de guidage en pivotement avec des masses polaires aimantées disposées faces à ces anneaux magnétisés de façon à les repousser ;
- la figure 4 illustre une variante de la figure 3, le mobile comportant des anneaux de même polarité séparés par une gorge;
- la figure 5 illustre une variante de la figure 3, le mobile comportant une piste périphérique sur chant aimantée, repoussée par une masse polaire fixe située au niveau du plan du mobile ;
- la figure 6, en perspective, et la figure 7, illustrent l'invention, où en section analogue à celle de la figure 3, représentent une version très efficace en auto-centrage, avec trois rangées concentriques de masses polaires fixes dont la médiane fait face aux anneaux aimantés du mobile, les rangées extrêmes développant un champ magnétique supérieur à celui existant au niveau de la piste médiane ; la figure 8 illustre cette répartition de champs, avec le rayon depuis l'axe de pivotement en abscisse, et l'intensité du champ en ordonnée ;
- la figure 9 illustre une section d'une variante, où les masses polaires au-dessus et au-dessous du mobile sont sur des rayons respectivement inférieur et supérieur à celui de l'anneau magnétisé du mobile ;
- la figure 10 illustre une section d'une variante, où l'anneau du mobile est incliné d'environ 30°, et où les masses polaires fixes antagonistes le sont également, ces masses polaires au-dessus et au-dessous du mobile sont, en projection sur un cône de même inclinaison, sur des rayons respectivement inférieur et supérieur à celui de l'anneau magnétisé du mobile ;
- la figure 11 illustre une section d'une autre variante, où les champs au-dessus et au-dessous du mobile sont développés selon des surfaces cylindriques face à l'anneau magnétisé du mobile ;
- la figure 12 représente, schématiquement et en vue de dessus, une montre équipée d'un ensemble selon l'invention avec un mobile avec des surfaces électrisées, et un dispositif de guidage en pivotement avec des surfaces antagonistes électrisées ;
- la figure 13 représente, schématiquement et en perspective, une horloge équipée d'un ensemble selon l'invention avec un mobile en lévitation au niveau d'une seule de ses faces.

### Description détaillée des modes de réalisation référés

La configuration concerne un sous-ensemble horloger 10 pour un mouvement 100. Ce sous-ensemble 10 comporte, d'une part un mobile horloger 2 avec au moins une surface périphérique 3, en l'occurrence une première 31 surface périphérique annulaire de révolution autour d'un axe de pivotement D du mobile 2, et d'autre part un dispositif de guidage en pivotement 1 autour d'un axe virtuel, que l'on dénomme ici axe théorique D0 d'un mécanisme horloger.

Ce dispositif 1 est, en général, lié à une platine ou un pont du mouvement 100 de la pièce d'horlogerie telle que montre 200 ou horloge 300. L'invention est toutefois utilisable avec le dispositif 1 monté solidaire d'un composant mobile, roue, masse oscillante, bascule, ou autre. La première surface périphérique 31 est magnétisée ou électrisée, axialement de manière uniforme selon la coordonnée radiale, et de préférence de manière uniforme selon la coordonnée angulaire.

Ceci signifie que le champ résultant, magnétique ou/et électrostatique selon le cas, est dirigé selon une direction dite axiale c'est-à-dire parallèle à l'axe théorique D0. Ce champ a la même valeur pour toute position angulaire dans un plan perpendiculaire à l'axe théorique D0. On notera, à ce propos, que la première surface périphérique 31 annulaire de révolution est de préférence plane, perpendiculaire à l'axe de pivotement D, qui a vocation à être aligné en fonctionnement avec l'axe théorique D0.

Et le dispositif 1 comporte, ou bien un premier anneau magnétisé ou respectivement électrisé, de préférence de manière uniforme, ou bien au moins trois premières surfaces 11, qui sont magnétisées, ou respectivement électrisées, en opposition avec la première surface périphérique 31 de façon à la repousser au niveau d'un premier interface 41. Ces premières surfaces 11 sont disposées, de préférence, de façon régulière autour de l'axe théorique D0, pour le maintien en lévitation axiale selon la direction D0 du mobile 2. Dans une réalisation illustrée par les figures, ces premières surfaces 11 sont disposées en triangle équilatéral centré sur l'axe D0. Naturellement, elles peuvent être plus nombreuses, selon un polygone irrégulier ou de préférence régulier, ou encore constituer ensemble une unique surface continue d'un anneau ou similaire.

Si le premier anneau ou les au moins trois premières surfaces 11 sont magnétisés ou électrisés, de préférence de manière uniforme, d'autres réalisations, dites opportunément non-uniformes, sont possibles, par exemple avec des champs d'intensité ou de direction particulières, présentant des caractéristiques cycliques, notamment périodiques.

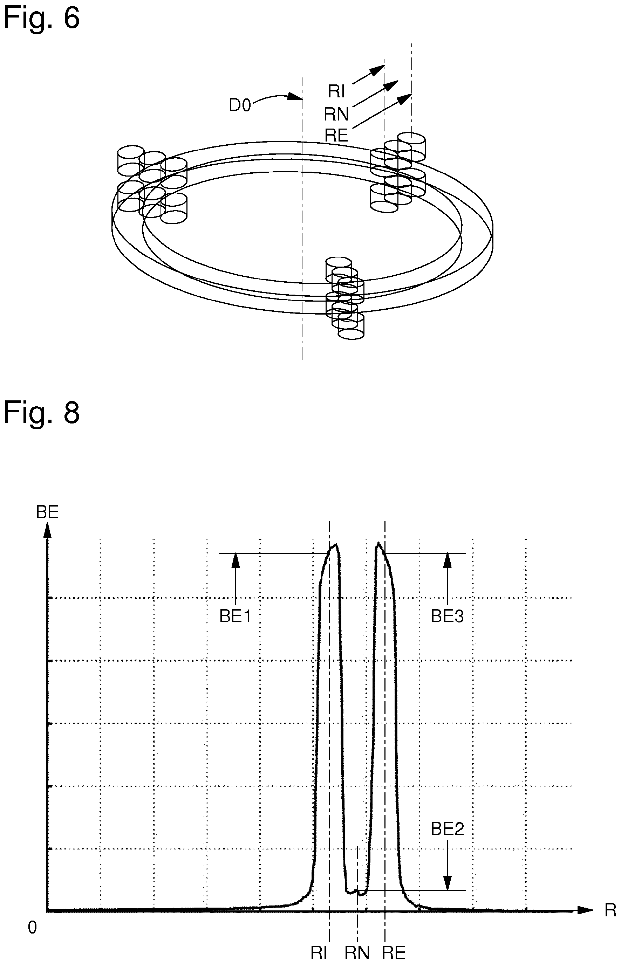

Il est souvent plus simple de travailler avec des composants uniformes, et de les combiner opportunément pour imposer un niveau minimum de champ à l'endroit où l'on veut positionner la première surface périphérique 31, tel qu'on le verra plus loin dans une réalisation particulière illustrée notamment par la figure 6, avec trois groupes à 120° de six aimants : trois supérieurs et trois inférieurs).

Mais il est aussi possible, quoique plus complexe à réaliser, d'obtenir une précision d'aimantation, ou respectivement d'électrisation, suffisante pour intégrer la modulation radiale du champ dans un seul composant : c'est ce que l'on appelle ici une surface unique aimantée, ou respectivement électrisée, de manière « opportunément non-uniforme ».

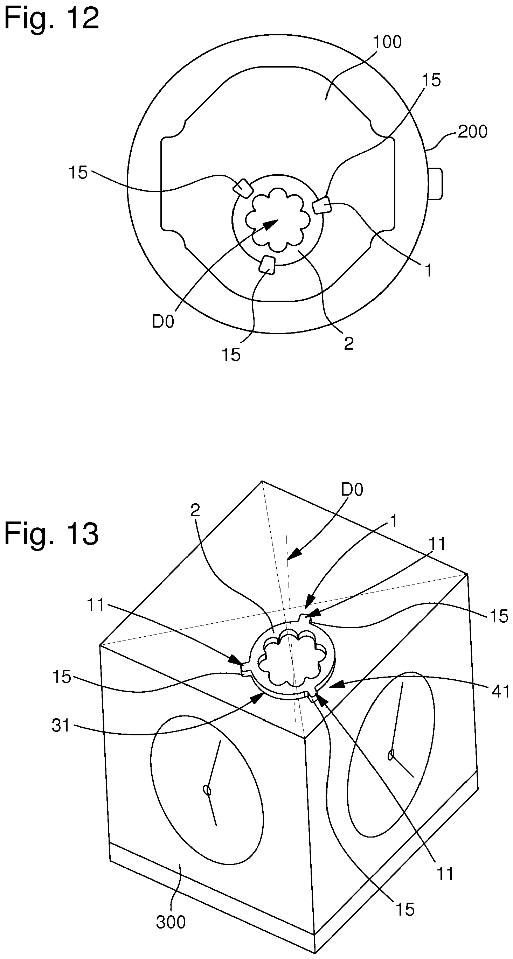

L'application de l'invention, sous cette forme élémentaire, à une pièce d'horlogerie statique telle une horloge 300 visible sur la figure 13 où les premières surfaces 11 sont situées sous le mobile 2, permet de maintenir ce mobile 2 en lévitation. Dans une telle application statique, peu de chocs sont à redouter (naturellement le mobile 2 doit être immobilisé en cas de transport par une bride ou similaire), et, pour des valeurs d'accélération inférieures à 10 g, le centrage peut être assuré par un moyen de maintien radial, constitué par un ensemble de butées, ou galets, ou pierres cylindriques, ou ressorts, ou similaire, sans dégrader sensiblement le gain, en termes de frottements, de la solution proposée par l'invention. De préférence les éléments constituant ce moyen de maintien radial sont positionnés en correspondance radiale avec les premières surfaces 11. Les pertes dues au frottement existent uniquement en direction radiale, et le frottement est bien inférieure à celui que l'on aurait avec un pivot, quand l'axe D0 est vertical.

Dans une telle application statique, un champ magnétique ou électrostatique peut être généré par des moyens externes : en particulier au moins un électro-aimant peut créer des champs magnétiques au niveau des premières surfaces 11 sans autre limitation d'intensité du champ que celle de la perturbation des autres organes du mouvement. Cette limite peut être contournée par l'utilisation de moyens d'isolement ou de blindage de champ magnétique ou/et électrostatique autour du mobile 2 et du dispositif de guidage en pivotement 1, ou par l'utilisation de matériaux faiblement paramagnétiques comme aluminium, or, laiton ou similaire (perméabilité magnétique inférieure à 2) dans la variante magnétique, ou faiblement diélectriques dans la variante électrostatique (constante diélectrique comprise entre 1 et 50 et rigidité diélectrique supérieure à 10 MV/m).

L'application de l'invention à une montre 200 nécessite un maintien dans toutes les positions de l'espace du mobile 2, et une capacité d'absorption des chocs sans perturbation notable, et une architecture permettant d'assurer, outre la lévitation du mobile 2, le centrage ou le recentrage permanent de son axe de pivotement D avec l'axe théorique D0 du dispositif de guidage en pivotement 1.

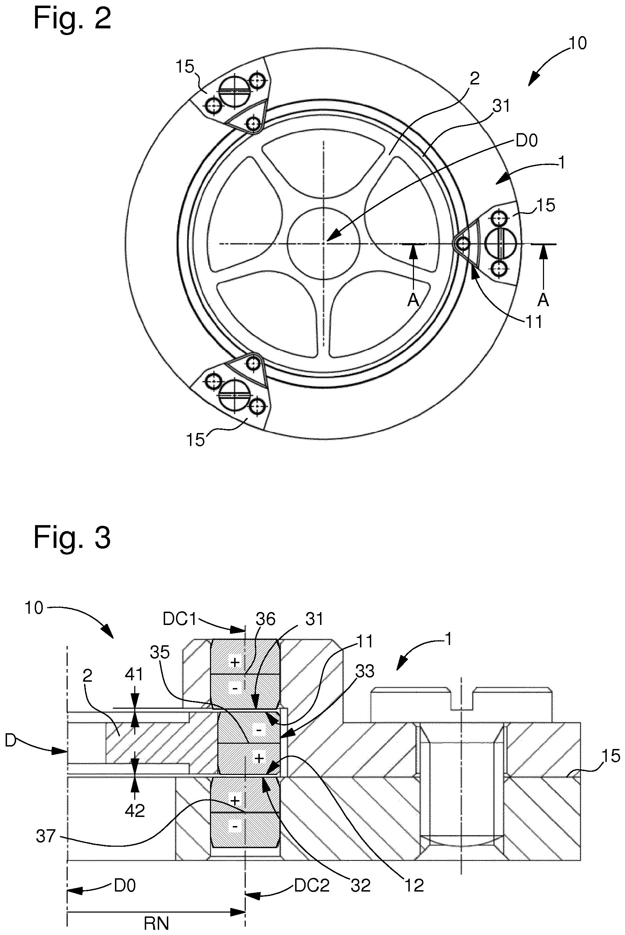

A cet effet, tel que visible notamment sur la figure 3, le mobile horloger 2 comporte une première 31 et une deuxième 32 surfaces périphériques 3 annulaires de révolution autour d'un même axe de pivotement D du mobile 2 et opposées l'une à l'autre de part et d'autre du mobile 2. On rajoute donc une deuxième surface 32 qui joue le même rôle que la première 31, mais en opposition avec elle. Selon la géométrie du mobile 2, ces deux surfaces 31 et 32 sont de part et d'autre du mobile 2 dans son entier, ou bien d'un flasque ou d'une collerette qu'il comporte, ou autre. De façon préférée, mais non obligatoire, ces surfaces annulaires 31 et 32 ont un rayon moyen identique RN.

La deuxième surface périphérique 32 est magnétisée ou électrisée, de préférence de manière uniforme selon la coordonnée angulaire.

Si le deuxième anneau ou les au moins trois deuxièmes surfaces 12 sont magnétisés ou électrisés, de préférence de manière uniforme, d'autres réalisations, dites opportunément non-uniformes, sont possibles, par exemple avec des champs d'intensité ou de direction particulières, présentant des caractéristiques cycliques, notamment périodiques, et/ou présentant un gradient d'aimantation non-monotone selon la coordonnée radiale considérée depuis l'axe théorique D0, produisant, par exemple, un champ magnétique inférieur en correspondance d'une couronne radiale, délimitée entre un rayon un rayon minimum Rm et un rayon maximum RM, avec Rm<RM, cette non-uniformité favorisant le centrage du mobile 2 en sustentation.

Les figures montrent les différentes surfaces utiles, 31, 32, 33, du mobile, portées par des masses polaires, respectivement 35 ou 35A et 35B pour les surfaces 31 et 32, et 38 pour une surface 33 de chant. Cette disposition est une variante particulière de l'invention, qui n'est pas limitative, en effet, le mobile 2 peut être directement aimanté ou électrisé au niveau de certaines de ses surfaces.

De façon similaire, les figures illustrent une structure porteuse 15 du dispositif 1, qui portent des masses polaires : supérieure 36 pour la première surface 11, inférieure 37 pour la deuxième surface 12, tangentielle 39 portant une troisième surface 13 pour coopérer avec une troisième surface de chant 33. Ces réalisations ne sont pas non plus limitatives. Une réalisation commode consiste à utiliser des aimants ou/et des barreaux électrisés pour constituer de telles masses polaires. Naturellement, les surfaces de la structure porteuse 15 peuvent aussi être directement aimantées ou électrisées. Comme la première surface 31, la deuxième surface périphérique 32 est magnétisée ou électrisée. Et le dispositif 1 comporte, ou bien un deuxième anneau magnétisé ou respectivement électrisé, ou bien au moins trois deuxièmes surfaces 12 magnétisées ou respectivement électrisées en opposition avec la deuxième surface périphérique 32 de façon à la repousser au niveau d'un deuxième interface 42, les deuxièmes surfaces 12 étant disposées, de préférence, de façon régulière autour de l'axe théorique D0, de façon analogue à la disposition des premières surfaces 11.

Cette disposition régulière est surtout utile pour les mécanismes pour lesquels on recherche une bonne tenue radiale et un bon centrage.

Naturellement, les différentes variantes qui vont être décrites ci-après, pour une version avec une première 31 et une deuxième 32 surfaces périphériques opposées, sont aussi applicables à la version de la figure 13, et en particulier les variantes relatives au centrage.

Comme dans la variante décrite ci-dessus où le mobile 2 a une première surface périphérique 31 unique, tout ou partie du centrage peut être assuré par un moyen de maintien radial analogue à ceux décrits plus hauts. Toutefois, certaines variantes décrites ici permettent d'assurer la fonction de centrage proprement dite par un agencement particulier des champs magnétiques ou/et électrostatiques en présence. Le moyen de maintien radial sert alors essentiellement de butée de sécurité de fin de course, et peut être réglé avec un jeu tel qu'il n'y ait aucun contact en marche normal entre le mobile 2 et les composants de ce moyen de maintien radial. Un tel moyen de maintien radial, constitués notamment de butées mécaniques, est avantageusement recouvert de matériaux jouant un rôle d'amortissement de l'énergie du choc, par exemple en matériaux diamagnétiques (susceptibilité magnétique négative, inférieure ou égale à -10⁻⁵.

Dans un mode particulier de réalisation, les premières surfaces 11 sont regroupées sur un premier anneau selon l'axe théorique D0, ou/et les deuxièmes surfaces 12 sont regroupées sur un deuxième anneau selon l'axe théorique D0.

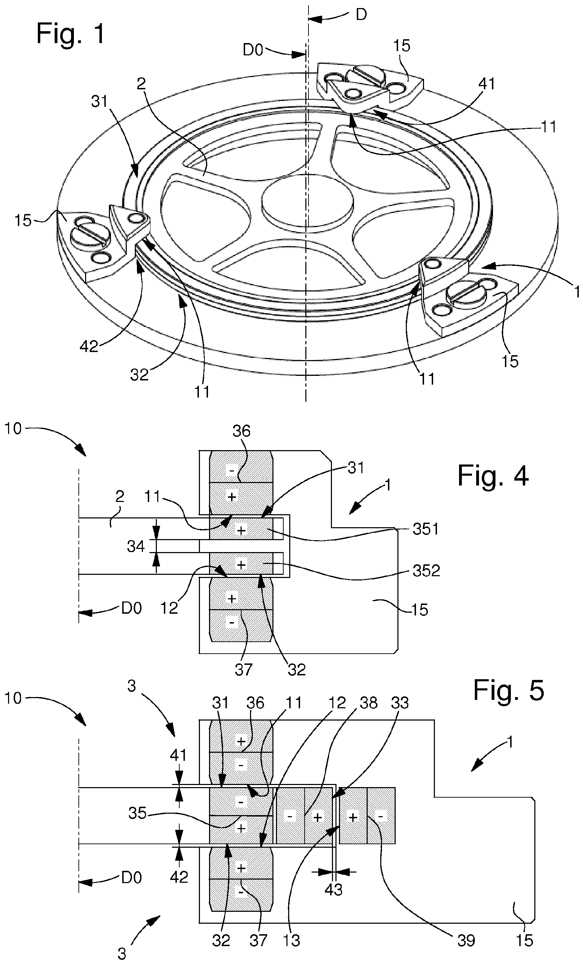

Différentes variantes de réalisation sont possibles, notamment :
- la première surface périphérique 31 est séparée de la deuxième surface périphérique 32 par, ou bien un faible diélectrique (constante diélectrique entre 1 et 50 et rigidité diélectrique supérieure à 10 MV/m) dans une gorge médiane 34 du mobile 2, tel que visible sur la figure 4. Une telle gorge 34 comporte, entre les zones 351 et 352 du mobile 2, un milieu qui est selon le cas, ou faiblement paramagnétique (perméabilité magnétique inférieure à 2) ou diélectrique, avec alors une constante diélectrique (constante diélectrique comprise entre 1 et 50 et rigidité diélectrique supérieure à 10 MV/m). On peut aussi utiliser un diamagnétique (susceptivité magnétique négative et inférieure ou égale à 10⁻⁵) tel que graphite ou graphène;
- tel que visible sur la figure 3, la première surface périphérique 31 est connexe à la deuxième surface périphérique 32 et elles ont des aimantations ou électrisations de polarités opposées.

L'essentiel est de ne pas créer de déséquilibre au niveau des intensités des champs magnétiques ou/et électrostatiques auxquels est soumis le mobile 2, notamment selon la composante parallèle à l'axe théorique D0 qui conditionne la lévitation.

Le dimensionnement du mobile 2 et des champs est naturellement délicat. En général, la lévitation d'un mobile 2, tel qu'une cage, de masse inférieure à 1 gramme, notamment voisine de 0,2 g, soumise à un couple de 1 g.mm, est possible, mais demande un travail de dimensionnement et de prototypage non négligeable (quelques mois si on arrive rapidement à optimiser la fabrication des composants magnétiques ou électrostatiques utilisés).

Un exemple de réalisation met en oeuvre des aimants néodyme-fer-bore aimantés axialement avec un champ rémanent de 1.4 T, de rayon 0.25 mm et hauteur 0.5 mm. Le mobile 2 est une couronne magnétique aimantée axialement avec champ rémanent de 1T, de diamètres 6.02 mm et 5.62 mm et hauteur 0.45 mm. La largeur des interfaces 41 et 42 est choisie égale à 0.025 mm. Ces valeurs permettent d'assurer la lévitation, la multiplication du nombre de masses polaires permet une adaptation correcte à la masse du mobile et au couple qui lui est appliqué

De façon à assurer un centrage correct de l'axe de pivotement D du mobile 2 par rapport à l'axe théorique D0, et à assurer un recentrage après un mouvement du porteur (accélérations de 20g environ), et une bonne résistance à des chocs (qui peuvent atteindre une accélération de 5000g sur une montre), le mobile 2 comporte avantageusement des moyens complémentaires de centrage. Dans la variante de la figure 5, ces moyens complémentaires de centrage comportent une troisième surface périphérique de chant 33 aimantée ou électrisée radialement de manière uniforme selon la coordonnée angulaire, et le dispositif 1 comporte au moins trois troisièmes surfaces 13 magnétisées ou respectivement électrisées, toutes en opposition avec cette troisième surface périphérique de chant 33, et disposées de façon régulière autour de l'axe théorique D0. Cette troisième surface de chant 33 peut faire partie intégrante du mobile 2, ou bien d'un constituant rapporté comme un anneau ou similaire.

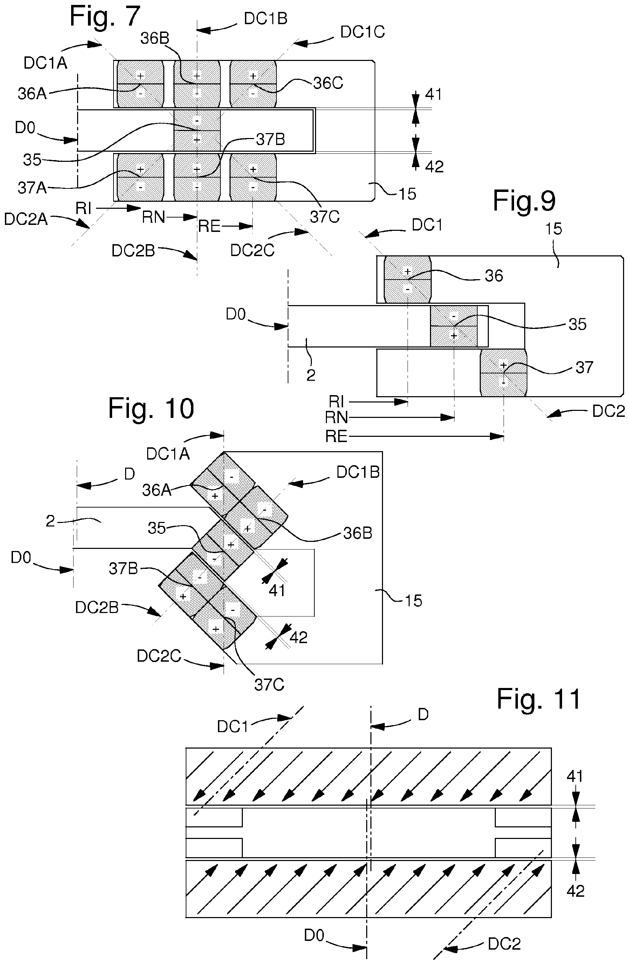

La figure 7 illustre l'invention apportant une sécurité encore meilleure pour éviter une dérive radiale du mobile 2 : chaque dite première surface 11 et chaque deuxième surface 12 comporte des moyens d'émission de plusieurs champs magnétiques ou électrostatiques de même sens au niveau de l'interface respectif 41, 42. Ces champs ont des directions sensiblement parallèles entre elles au niveau de l'interface respectif 41, 42. Cette suite de champs comporte au moins :
- un premier champ intérieur BE1 au niveau d'un rayon intérieur RI par rapport à l'axe théorique D0 qui est de valeur inférieure à celle du rayon moyen RM de la surface périphérique 31 ou 52 qui lui fait face ;
- un deuxième champ normal BE2 au niveau d'un rayon normal RN de valeur égale à ce rayon moyen RM ;
- et un troisième champ extérieur BE3 au niveau d'un rayon extérieur RE de valeur supérieure à celle du rayon normal RN ;
- le deuxième champ normal BE2 étant d'intensité inférieure à celle du champ intérieur BE1 et à celle du champ extérieur BE3, de façon à ramener l'axe de pivotement D du mobile 2 en concordance avec l'axe théorique D0 après toute perturbation subie par le sous-ensemble 10.

Dans une telle application, dans l'exemple de la figure 7, avec un dispositif 1 comportant trois stations chacune équipée de 6 masses polaires, supérieures 36A, 36B, 36 C, et inférieures 37A, 37B, 37C, dans le cas de masses polaires aimantées, on a donc, pour soutenir le mobile 2, un total de 18 aimants, qui de préférence sont tous identiques en ce qui concerne leur géométrie, mais dont les aimants disposé sur le rayon intermédiaire sont plus faibles (champ rémanent de 0.8 T) que les aimants internes et externes (champ rémanent de 1.4 T). Dans ce cas, le mobile 2 ressent une forte répulsion à se déplacer radialement, parce que, en se déplaçant, il se trouve dans un champ opposé bien plus fort que le champ présent dans sa position d'équilibre, tel que visible sur la figure 8. Ainsi, dans cet exemple:
- dans toutes les positions (horizontales et verticales), le mobile 2 est soutenu en lévitation, sans contact avec les butées représentées axialement par les surfaces 31, 32 et radialement par la structure porteuse 15 que comporte le dispositif 1 pour supporter les masses polaires qui comportent ces surfaces 31 et 32, et les vibrations induites par l'entretien sont infimes et ne dépassent pas deux micromètres en direction axiale et radiale ;
- dans toutes les positions, le mobile 2 résisterait à une accélération comprise entre 15 g et 25 g, selon la direction de l'accélération, avant d'entrer en contact avec une butée.

Cet exemple n'est pas limitatif, ainsi on peut utiliser des aimants de même rémanence, mais simplement de volume différent.

Une variante est illustrée à la figure 9 où, en position d'équilibre, le mobile 2 est situé entre des masses polaires supérieure 36 et inférieure 37 décalées radialement entre elles et par rapport à la masse polaire 35 du mobile 2, et ce mobile 2 est soumis à des champs obliques s'équilibrant, et où une dérive radiale produit un effet similaire pour ramener les première 31 et deuxième 32 surfaces périphériques du mobile 2 sensiblement au milieu de l'intervalle entre les rayons intérieur RI et extérieur RE des masses polaires du dispositif 1, au niveau du rayon normal RN.

La figure 10 montre une autre variante, avec moins de masses polaires que sur la figure 7 : la première surface périphérique 31, appartenant à des masses polaires supérieures 36A et 36B inclinées, et la deuxième surface périphérique 32, appartenant à des masses polaires inférieures 37B et 37C inclinées, sont coniques par rapport à l'axe de pivotement D selon un angle de cône e. En conjugaison, chaque première surface 11 et chaque deuxième surface 12 a une normale dans un plan passant par l'axe théorique D0 et inclinée du même angle de cône e, dans le même sens que la première surface périphérique 31 et respectivement la deuxième surface périphérique 32, de façon à assurer des largeurs d'interfaces 41, 42 sensiblement constantes. En cas de dérive radiale suite à une accélération, le système tend aussi à s'auto-réguler, et le recentrage est effectué automatiquement.

Dans une autre variante visible sur la figure 11, au niveau du premier interface 41 les lignes de champ magnétique ou électrostatique sont tangentielles à un cylindre axé sur l'axe théorique D0 et obliques avec un même angle d'incidence α par rapport à une direction parallèle à l'axe théorique D0, et, au niveau du deuxième interface 42, les lignes de champ magnétique ou électrostatique sont tangentielles à un cylindre axé sur l'axe théorique D0 et obliques avec un même angle d'incidence β par rapport à une direction parallèle à l'axe théorique D0.

On peut améliorer encore la tenue du mobile en jouant sur les dimensions des surfaces 11 et 12, notamment avec un diamètre interne plus petit, donc avec une surface supérieure, ce qui est possible puisque l'invention permet de s'affranchir de tout pivot axial au niveau du mobile 2.

La figure 10 montre une solution alternative où la couronne aimanté de la cage est inclinée de 30° : dans ce cas le nombre d'aimants peut être réduit à 12 ; les aimants peuvent aussi être remplacés par une ou plusieurs plaquettes aimantées, positionnées inclinées de 30°.

La hauteur des aimants du négoce en néodyme-fer-bore peut être réduite jusqu'à 0.2 mm, ce qui autorise la confection de mobiles 2 très plats.

De préférence, pour la mise en oeuvre de l'invention, les surfaces qui sont aimantées ont un champ rémanent supérieur à 0,8 Tesla.

Dans la version utilisant un champ électrostatique, qui est compatible avec la faible masse du mobile 2 dans l'application à une montre, les surfaces qui sont électrisées sont préférentiellement réalisées avec des électrets.

Pour une bonne stabilisation et un bon fonctionnement, l'aimantation axiale du mobile, ou sa charge électrique si c'est le cas, est de préférence uniforme, ou sensiblement uniforme, selon la coordonnée angulaire.

De façon avantageuse, grâce à l'invention, le mobile 2 peut être réalisé exempt de tout pivot axial.

Dans des applications préférées et non limitatives, le mobile 2 est une cage de tourbillon ou de carrousel, ou un barillet de remontage ou de sonnerie, ou une roue.

Dans une application statique comme une horloge 300, dans une variante particulière, le mobile 2 est soumis, au niveau de la première surface périphérique 31, à un champ magnétique qui est généré par au moins un électro-aimant.

L'invention concerne encore un mouvement d'horlogerie 100 comportant au moins un tel sous-ensemble horloger 10. Selon une variante avantageuse, ce mouvement 100 comporte des moyens d'isolement ou de blindage de champ magnétique ou/et électrostatique autour du mobile 2 et du dispositif de guidage en pivotement 1.

L'invention concerne encore une montre 200 comportant au moins un tel mouvement d'horlogerie 100 ou/et comportant au moins un tel sous-ensemble horloger 10. Selon une variante avantageuse, cette montre 200 comporte des moyens d'isolement ou de blindage de champ magnétique ou/et électrostatique autour du mobile 2 et du dispositif de guidage en pivotement 1.

L'invention concerne encore une horloge 300 comportant au moins un tel mouvement d'horlogerie 100 ou/et comportant au moins un tel sous-ensemble horloger 10. Selon une variante avantageuse, cette horloge 300 comporte des moyens d'isolement ou de blindage de champ magnétique ou/et électrostatique autour du mobile 2 et du dispositif de guidage en pivotement 1.

En somme, dans une réalisation ne présentant pas de difficultés de fabrication, une cage de tourbillon comporte un anneau extérieur continu, magnétisé dans le sens axial, (par exemple + en Z+ et - en Z-). La platine du mouvement 100 comporte trois aimants magnétisés de même façon et disposés environ à 120° sur un rayon proche, mais inférieur ou supérieur à l'anneau de la cage de tourbillon. Un, deux ou trois ponts portent également trois aimants permettant de fermer le système de pivotement. Les trois paires d'aimant fixes, (platines et ponts), maintiennent en lévitation axiale et radiale l'anneau portant la cage de tourbillon. Cet assemblage permet de garantir la position de la cage et permettre sa rotation sans frottement. Cette fonction est complétée par une fonction amortisseur de choc pour la cage de tourbillon, qui permet, éventuellement de faire abstraction de systèmes antichocs embarqués dans la cage.

On peut encore loger deux anneaux magnétisés dans la platine et le pont du mouvement, et trois aimants dans la cage, cette solution est un peu moins intéressante au niveau encombrement.

Un tel guidage de cage de tourbillon extérieur ou périphérique permet de gagner de l'épaisseur en supprimant les deux pivotements usuels au centre du mobile.

L'invention procure ainsi un pivotement sans frottement et sans variation de frottement, ce qui permet de gagner en rendement et en stabilité de fonctionnement.

Une cage de tourbillon avec un guidage en pivotement selon l'invention est soumise à des oscillations permanentes de haute fréquence (de l'ordre de 100 Hz) et de faible amplitude (de l'ordre du micromètre) pendant son pivotement. Ces oscillations sont négligeables pour le fonctionnement correct du mécanisme.

Remplissant la fonction d'amortisseur de choc, le dispositif selon l'invention permet encore de simplifier le pivotement du balancier embarqué dans la cage et de diminuer la masse et le nombre des composants constituant la cage de tourbillon.

L'invention autorise la réalisation de tourbillons extra-plats.

Ces pivotements de cages de tourbillon peuvent être avantageusement appliqués à d'autres mobiles horlogers, masse oscillante, tambour de barillet, ou rouages.

## Revendications

1. Sous-ensemble horloger (10) comportant d'une part un mobile horloger (2) avec au moins une première (31) surface périphérique (3) annulaire de révolution autour d'un axe de pivotement (D) dudit mobile (2), et d'autre part un dispositif de guidage (1) en pivotement autour d'un axe théorique (D0) d'un mécanisme horloger, où ladite première surface périphérique (31) est magnétisée, et où ledit dispositif (1) comporte, ou bien un premier anneau magnétisé, ou bien au moins trois premières surfaces (11) magnétisées, en opposition avec ladite première surface périphérique (31) de façon à la repousser au niveau d'un premier interface (41), pour le maintien en lévitation axiale dudit mobile (2) selon la direction dudit axe théorique (D0), où ledit un mobile horloger (2) comporte ladite première (31) et une deuxième (32) surfaces périphériques (3) magnétisées et annulaires de révolution autour du même axe de pivotement (D) dudit mobile (2) et opposées l'une à l'autre de part et d'autre dudit mobile (2), et où ledit dispositif (1) comporte, ou bien un deuxième anneau magnétisé, ou bien au moins trois deuxièmes surfaces (12) magnétisées en opposition avec ladite deuxième surface périphérique (32) de façon à la repousser au niveau d'un deuxième interface (42), pour le maintien en lévitation axiale dudit mobile (2) selon la direction dudit axe théorique (D0), **caractérisé en ce que** chaque dite au moins trois premières surfaces (11) et chaque dite au moins trois deuxièmes surfaces (12) comporte des moyens d'émission de plusieurs champs magnétiques de même sens au niveau de l'interface respectif (41, 42) et de directions sensiblement parallèles entre elles au niveau dudit interface respectif (41, 42), comportant au moins un premier champ intérieur (BE1) au niveau d'un rayon intérieur (RI) par rapport audit axe théorique (D0), ledit rayon intérieur (RI) est de valeur inférieure à celle du rayon moyen (RM) de ladite surface périphérique (31, 32) qui lui fait face, un deuxième champ normal (BE2) au niveau d'un rayon normal (RN) de valeur égale au dit rayon moyen (RM), et un troisième champ extérieur (BE3) au niveau d'un rayon extérieur (RE) de valeur supérieure à celle dudit rayon moyen (RM), ledit deuxième champ normal (BE2) étant d'intensité inférieure à celle dudit champ intérieur (BE1) et à celle dudit champ extérieur (BE3) de façon à ramener ledit axe de pivotement (D) dudit mobile (2) en concordance avec ledit axe théorique (D0) après toute perturbation subie par ledit sous-ensemble (10).

2. Sous-ensemble horloger (10) selon la revendication 1, **caractérisé en ce que** les surfaces qui sont aimantées ont un champ rémanent supérieur à 0,8 Tesla.

3. Sous-ensemble horloger (10) selon la revendication 1 ou 4, **caractérisé en ce que** ledit mobile (2) est soumis, au niveau de ladite première surface périphérique (31) à un champ magnétique qui est généré par au moins un électro-aimant

4. Sous-ensemble horloger (10) comportant d'une part un mobile horloger (2) avec au moins une première (31) surface périphérique (3) annulaire de révolution autour d'un axe de pivotement (D) dudit mobile (2), et d'autre part un dispositif de guidage (1) en pivotement autour d'un axe théorique (D0) d'un mécanisme horloger, où ladite première surface périphérique (31) est électrisée, et où ledit dispositif (1) comporte, ou bien un premier anneau respectivement électrisé, ou bien au moins trois premières surfaces (11) respectivement électrisées, en opposition avec ladite première surface périphérique (31) de façon à la repousser au niveau d'un premier interface (41), pour le maintien en lévitation axiale dudit mobile (2) selon la direction dudit axe théorique (D0), ledit un mobile horloger (2) comportant ladite première (31) et une deuxième (32) surfaces périphériques (3) annulaires de révolution autour d'un même axe de pivotement (D) dudit mobile (2) et opposées l'une à l'autre de part et d'autre dudit mobile (2), ladite deuxième surface périphérique (32) étant électrisée, et ledit dispositif (1) comportant ou bien un deuxième anneau électrisé, ou bien au moins trois deuxièmes surfaces (12) électrisées en opposition avec ladite deuxième surface périphérique (32) de façon à la repousser au niveau d'un deuxième interface (42), pour le maintien en lévitation axiale dudit mobile (2) selon la direction dudit axe théorique (D0), et chaque dite au moins trois première surfaces (11) et chaque dite au moins trois deuxième surfaces (12) comportent des moyens d'émission de plusieurs champs électrostatiques de même sens au niveau de l'interface respectif (41, 42) et de directions sensiblement parallèles entre elles au niveau dudit interface respectif (41, 42), comportant au moins un premier champ intérieur (BE1) au niveau d'un rayon intérieur (RI) par rapport audit axe théorique (D0), ledit rayon intérieur (RI) est de valeur inférieure à celle du rayon moyen (RM) de ladite surface périphérique (31, 32) qui lui fait face, un deuxième champ normal (BE2) au niveau d'un rayon normal (RN) de valeur égale au dit rayon moyen (RM), et un troisième champ extérieur (BE3) au niveau d'un rayon extérieur (RE) de valeur supérieure à celle dudit rayon moyen (RM), ledit deuxième champ normal (BE2) étant d'intensité inférieure à celle dudit champ intérieur (BE1) et à celle dudit champ extérieur (BE3) de façon à ramener ledit axe de pivotement (D) dudit mobile (2) en concordance avec ledit axe théorique (D0) après toute perturbation subie par ledit sous-ensemble (10).

5. Sous-ensemble horloger (10) selon la revendication 4, **caractérisé en ce que** les surfaces qui sont électrisées sont réalisées avec des électrets.

6. Sous-ensemble horloger (10) selon l'une des revendications 1 à 5, **caractérisé en ce que** lesdites au moins trois premières surfaces (11) sont disposées de façon régulière autour dudit axe théorique (D0).

7. Sous-ensemble horloger (10) selon l'une des revendications 1 à 6, **caractérisé en ce que** lesdites au moins trois deuxièmes surfaces (12) sont disposées de façon régulière autour dudit axe théorique (D0).

8. Sous-ensemble horloger (10) selon l'une des revendications 1 à 7, **caractérisé en ce que** lesdites au moins trois premières surfaces (11) sont regroupées sur un premier anneau selon ledit axe théorique (D0), ou/et **en ce que** lesdites au moins trois deuxièmes surfaces (12) sont regroupées sur un deuxième anneau selon ledit axe théorique (D0).

9. Sous-ensemble horloger (10) selon l'une des revendications 8, **caractérisé en ce que** ladite première surface périphérique (31) est séparée de ladite deuxième surface périphérique (32) par un faible diélectrique, de constante diélectrique entre 1 et 50 et rigidité diélectrique supérieure à 10 MV/m, dans une gorge médiane (34) que comporte ledit mobile (2).

10. Sous-ensemble horloger (10) selon l'une des revendications 1 à 9, **caractérisé en ce que** ladite première surface périphérique (31) est connexe à ladite deuxième surface périphérique (32) et qu'elles ont des aimantations ou électrisations de polarités opposées.

11. Sous-ensemble horloger (10) selon l'une des revendications 1 à 10, **caractérisé en ce que** ladite première surface périphérique (31) et ladite deuxième surface périphérique (32) sont coniques par rapport audit axe de pivotement (D) selon un angle de cône (e).

12. Sous-ensemble horloger (10) selon la revendication 11, **caractérisé en ce que** chaque dite au moins trois première surfaces (11) et chaque dite au moins trois deuxième surfaces (12) a une normale dans un plan passant par ledit axe théorique (D0) et inclinée dudit angle de cône (e) dans le même sens que ladite première surface périphérique (31) et respectivement ladite deuxième surface périphérique (32) de façon à assurer des largeurs d'interfaces (41, 42) sensiblement constantes.

13. Sous-ensemble horloger (10) selon la revendication 1 ou 5, **caractérisé en ce que** ledit mobile (2) est situé entre des masses polaires supérieure (36) et inférieure (37) décalées radialement entre elles et par rapport à une masse polaire (35) que comporte ledit mobile (2) lequel est soumis à des champs obliques s'équilibrant, de façon à ramener, lors d'une dérive radiale, lesdites première (31) et deuxième (32) surfaces périphériques dudit mobile (2) sensiblement au milieu de l'intervalle entre lesdits rayons intérieur (RI) et extérieur (RE) desdites masses polaires dudit dispositif (1), au niveau dudit rayon normal (RN).

14. Sous-ensemble horloger (10) selon l'une des revendications 1 à 10, **caractérisé en ce que** ladite première surface périphérique (31) appartient à des masses polaires supérieures inclinées (36A ; 36B), et que ladite deuxième surface périphérique (32) appartient à des masses polaires inférieures inclinées (37B ; 37C), et sont coniques par rapport audit axe de pivotement (D) selon un angle de cône (e), et que, en conjugaison, chaque dite au moins trois première surfaces (11) et chaque dite au moins trois deuxième surfaces (12) a une normale dans un plan passant par ledit axe théorique (D0) et inclinée du même dit angle de cône (e), dans le même sens que ladite première surface périphérique (31) et respectivement ladite deuxième surface périphérique (32), de façon à assurer des largeurs d'interfaces (41 ; 42) sensiblement constantes.

15. Sous-ensemble horloger (10) selon l'une des revendications 1 à 10, **caractérisé en ce que**, au niveau dudit premier interface (41) les lignes de champ magnétique ou électrostatique sont tangentielles à un cylindre axé sur ledit axe théorique (D0) et obliques avec un même angle d'incidence (α) par rapport à une direction parallèle audit axe théorique (D0), et **en ce que**, au niveau dudit deuxième interface (42) les lignes de champ magnétique ou électrostatique sont tangentielles à un cylindre axé sur ledit axe théorique (D0) et obliques avec un même angle d'incidence (β) par rapport à une direction parallèle audit axe théorique (D0).

16. Sous-ensemble horloger (10) selon l'une des revendications 1 à 10, **caractérisé en ce que** ledit mobile (2) comporte une troisième surface périphérique de chant (33) aimantée ou électrisée, et **en ce que** ledit dispositif (1) comporte au moins trois troisièmes surfaces (13) magnétisées ou respectivement électrisées, toutes en opposition avec ladite troisième surface périphérique de chant (33) pour assurer le centrage dudit mobile (2), et disposées de façon régulière autour dudit axe théorique (D0).

17. Sous-ensemble horloger (10) selon l'une des revendications 1 à 16, **caractérisé en ce que** ledit mobile (2) est exempt de tout pivot axial.

18. Sous-ensemble horloger (10) selon l'une des revendications 1 à 17, **caractérisé en ce que** ledit mobile (2) est une cage de tourbillon ou de carrousel.

19. Sous-ensemble horloger (10) selon l'une des revendications 1 à 17, **caractérisé en ce que** ledit mobile (2) est une masse oscillante de remontage.

20. Sous-ensemble horloger (10) selon l'une des revendications 1 à 17, **caractérisé en ce que** ledit mobile (2) est un barillet.

21. Sous-ensemble horloger (10) selon l'une des revendications 1 à 17, **caractérisé en ce que** ledit mobile (2) est une roue.

22. Mouvement d'horlogerie (100) comportant au moins un sous-ensemble horloger (10) selon l'une des revendications 1 à 21, **caractérisé en ce qu'**il comporte des moyens d'isolement ou de blindage de champ magnétique ou/et électrostatique autour dudit mobile (2) et dudit dispositif de guidage en pivotement (1).

23. Montre (200) comportant au moins un mouvement d'horlogerie (100) selon la revendication 23 ou/et comportant au moins un sous-ensemble horloger (10) selon l'une des revendications 1 à 21, **caractérisé en ce qu'**elle comporte des moyens d'isolement ou de blindage de champ magnétique ou/et électrostatique autour dudit mobile (2) et dudit dispositif de guidage en pivotement (1).

24. Horloge (300) comportant au moins un mouvement d'horlogerie (100) selon la revendication 22 ou/et comportant au moins un sous-ensemble horloger (10) selon l'une des revendications 1 à 21, **caractérisé en ce qu'**elle comporte des moyens d'isolement ou de blindage de champ magnétique ou/et électrostatique autour dudit mobile (2) et dudit dispositif de guidage en pivotement (1).

## Patentansprüche

1. Uhrenunterbaugruppe (10), umfassend einerseits ein Uhrendrehteil (2) mit mindestens einer ersten (31), um eine Drehachse (D) des Drehteils (2) rotationssymmetrischen ringförmigen Umfangsoberfläche (3) und andererseits eine Drehführungsvorrichtung (1) um eine theoretische Achse (D0) eines Uhrenmechanismus, wobei die erste Umfangsoberfläche (31) magnetisiert ist und wobei die Vorrichtung (1) entweder einen ersten magnetisierten Ring oder mindestens drei magnetisierte erste Oberflächen (11) gegenüberliegend der ersten Umfangsoberfläche (31) umfasst, derart, dass diese auf Höhe einer ersten Grenzfläche (41) abgestoßen wird, um das Drehteil (2) in Richtung der theoretischen Achse (D0) axial in der Schwebe zu halten, wobei das Uhrendrehteil (2) die erste (31) und eine zweite (32) magnetisierte, um dieselbe Drehachse (D) des Drehteils (2) rotationssymmetrische ringförmige Umfangsoberfläche (3) umfasst, die einander auf beiden Seiten des Drehteils (2) gegenüberliegen, und wobei die Vorrichtung (1) entweder einen zweiten magnetisierten Ring oder mindestens drei magnetisierte zweite Oberflächen (12) gegenüberliegend der zweiten Umfangsoberfläche (32) umfasst, derart, dass diese auf Höhe einer zweiten Grenzfläche (42) abgestoßen wird, um das Drehteil (2) längs der Richtung der theoretischen Achse (D0) axial in der Schwebe zu halten, **dadurch gekennzeichnet, dass** jede der mindestens drei ersten Oberflächen (11) und jede der mindestens drei zweiten Oberflächen (12) Mittel zum Aussenden mehrerer Magnetfelder mit demselben Richtungssinn auf Höhe der jeweiligen Grenzfläche (41, 42) und mit zueinander im Wesentlichen parallelen Richtungen auf Höhe der jeweiligen Grenzfläche (41, 42) umfasst, die mindestens ein erstes inneres Feld (BE1) auf Höhe eines in Bezug auf die theoretische Achse (D0) inneren Radius (RI), dessen Wert kleiner ist als jener des mittleren Radius (RM) der Umfangsoberfläche (31, 32), die ihr gegenüberliegt, ein zweites normales Feld (BE2) auf Höhe eines normalen Radius (RN), dessen Wert gleich jenem des mittleren Radius (RM) ist, und ein drittes äußeres Feld (BE3) auf Höhe eines äußeren Radius (RE), dessen Wert größer als jener des mittleren Radius (RM) ist, umfassen, wobei das zweite normale Feld (BE2) eine Stärke besitzt, die kleiner als jene des inneren Feldes (BE1) und als jene des äußeren Feldes (BE3) ist, derart, dass die Drehachse (D) des Drehteils (2) nach jeder Störung, die sie durch die Unterbaugruppe (10) erfährt, in eine Deckung mit der theoretischen Achse (D0) zurückgeführt wird.

2. Uhrenunterbaugruppe (10) nach Anspruch 1, **dadurch gekennzeichnet, dass** die Oberflächen, die magnetisiert sind, ein Remanenzfeld größer als 0,8 Tesla haben.

3. Uhrenunterbaugruppe (10) nach Anspruch 1 oder 4, **dadurch gekennzeichnet, dass** das Drehteil (2) auf Höhe der ersten Umfangsoberfläche (31) einem Magnetfeld unterworfen ist, das durch mindestens einen Elektromagneten erzeugt wird.

4. Uhrenunterbaugruppe (10), umfassend einerseits ein Uhrendrehteil (2) mit mindestens einer ersten (31), um eine Drehachse (D) des Drehteils (2) rotationssymmetrischen ringförmigen Umfangsoberfläche (3) und andererseits eine Drehführungsvorrichtung (1) um eine theoretische Achse (D0) eines Uhrenmechanismus, wobei die erste Umfangsoberfläche (31) elektrisch geladen ist und wobei die Vorrichtung (1) entweder einen ersten elektrisch geladenen Ring oder mindestens drei elektrisch geladene erste Oberflächen (11) gegenüberliegend der ersten Umfangsoberfläche (31) umfasst, derart, dass diese auf Höhe einer ersten Grenzfläche (41) abgestoßen wird, um das Drehteil (2) in Richtung der theoretischen Achse (D0) axial in der Schwebe zu halten, wobei das Uhrendrehteil (2) die erste (31) und eine zweite (32) elektrisch geladene, um dieselbe Drehachse (D) des Drehteils (2) rotationssymmetrische ringförmige Umfangsoberfläche (3) umfasst, die einander auf beiden Seiten des Drehteils (2) gegenüberliegen, und wobei die Vorrichtung (1) entweder einen zweiten elektrisch geladenen Ring oder mindestens drei elektrisch geladene zweite Oberflächen (12) gegenüberliegend der zweiten Umfangsoberfläche (32) umfasst, derart, dass sie auf Höhe einer zweiten Grenzfläche (42) abgestoßen wird, um das Drehteil (2) längs der Richtung der theoretischen Achse (D0) axial in der Schwebe zu halten, wobei jede der mindestens drei ersten Oberflächen (11) und jede der mindestens drei zweiten Oberflächen (12) Mittel zum Aussenden mehrerer elektrostatischer Felder mit demselben Richtungssinn auf Höhe der jeweiligen Grenzfläche (41, 42) und mit zueinander im Wesentlichen parallelen Richtungen auf Höhe der jeweiligen Grenzfläche (41, 42) umfasst, die mindestens ein erstes inneres Feld (BE1) auf Höhe eines in Bezug auf die theoretische Achse (D0) inneren Radius (RI), dessen Wert kleiner ist als jener des mittleren Radius (RM) der Umfangsoberfläche (31, 32), die ihr gegenüberliegt, ein zweites normales Feld (BE2) auf Höhe eines normalen Radius (RN), dessen Wert gleich jenem des mittleren Radius (RM) ist, und ein drittes äußeres Feld (BE3) auf Höhe eines äußeren Radius (RE), dessen Wert größer als jener des mittleren Radius (RM) ist, umfassen, wobei das zweite normale Feld (BE2) eine Stärke besitzt, die kleiner als jene des inneren Feldes (BE1) und als jene des äußeren Feldes (BE3) ist, derart, dass die Drehachse (D) des Drehteils (2) nach jeder Störung, die sie durch die Unterbaugruppe (10) erfährt, in eine Deckung mit der theoretischen Achse (D0) zurückgeführt wird.

5. Uhrenunterbaugruppe (10) nach Anspruch 4, **dadurch gekennzeichnet, dass** die Oberflächen, die elektrisch geladen sind, mit Elektreten verwirklicht sind.

6. Uhrenunterbaugruppe (10) nach einem der Ansprüche 1 bis 5, **dadurch gekennzeichnet, dass** die mindestens drei ersten Oberflächen (11) um die theoretische Achse (D0) regelmäßig angeordnet sind.

7. Uhrenunterbaugruppe (10) noch einen der Ansprüche 1 bis 6, **dadurch gekennzeichnet, dass** die mindestens drei zweiten Oberflächen (12) um die theoretische Achse (D0) regelmäßig angeordnet sind.

8. Uhrenunterbaugruppe (10) nach einem der Ansprüche 1 bis 7, **dadurch gekennzeichnet, dass** die mindestens drei ersten Oberflächen (11) auf einem ersten Ring gemäß der theoretischen Achse (D0) angeordnet sind und/oder dass die mindestens drei zweiten Oberflächen (12) auf einem zweiten Ring gemäß der theoretischen Achse (D0) angeordnet sind.

9. Uhrenunterbaugruppe (10) nach Anspruch 8, **dadurch gekennzeichnet, dass** die erste Umfangsoberfläche (31) von der zweiten Umfangsoberfläche (32) durch ein schwaches Dielektrikum mit einer Dielektrizitätskonstante im Bereich von 1 bis 50 und einer dielektrischen Durchschlagsfestigkeit von mehr als 10 MV/m in einem mittleren Einstich (34), den das Drehteil (2) aufweist, getrennt ist.

10. Uhrenunterbaugruppe (10) nach einem der Ansprüche 1 bis 9, **dadurch gekennzeichnet, dass** die erste Umfangsoberfläche (31) mit der zweiten Umfangsoberfläche (32) benachbart ist und dass diese Magnetisierungen oder elektrische Ladungen mit entgegengesetzten Polaritäten aufweisen.

11. Uhrenunterbaugruppe (10) nach einem der Ansprüche 1 bis 10, **dadurch gekennzeichnet, dass** die erste Umfangsoberfläche (31) und die zweite Umfangsoberfläche (32) in Bezug auf die Drehachse (D) unter einem Konuswinkel (e) konisch sind.

12. Uhrenunterbaugruppe (10) nach Anspruch 11, **dadurch gekennzeichnet, dass** jede der mindestens drei ersten Oberflächen (11) und jede der mindestens drei zweiten Oberflächen (12) in einer Ebene, die durch die theoretische Achse (D0) verläuft, eine Normale besitzt, die unter dem Konuswinkel (e) in derselben Richtung wie die erste Umfangsoberfläche (31) und entsprechend die zweite Umfangsoberfläche (32) geneigt ist, derart, dass im Wesentlichen konstante Breiten von Grenzflächen (41, 42) sichergestellt sind.

13. Uhrenunterbaugruppe (10) nach Anspruch 1 oder 5, **dadurch gekennzeichnet, dass** sich das Drehteil (2) zwischen oberen polaren Massen (36) und unteren polaren Massen (37) befindet, die zueinander in Bezug auf eine polare Masse (35), die das Drehteil (2) aufweist, radial versetzt sind, wobei das Drehteil (2) sich ausgleichenden schrägen Feldern unterliegt, derart, dass bei einer radialen Abweichung die erste (31) und die zweite (32) Umfangsoberfläche des Drehteils (2) im Wesentlichen in die Mitte des Intervalls zwischen dem inneren Radius (RI) und dem äußeren Radius (RE) der polaren Massen der Vorrichtung (1) auf Höhe des normalen Radius (RN) zurückgeführt werden.

14. Uhrenunterbaugruppe (10) nach einem der Ansprüche 1 bis 10, **dadurch gekennzeichnet, dass** die erste Umfangsoberfläche (31) zu geneigten oberen polaren Massen (36A; 36B) gehört und dass die zweite Umfangsoberfläche (32) zu geneigten unteren polaren Massen (37B; 37C) gehört und dass sie in Bezug auf die Drehachse (D) unter einem Konuswinkel (e) konisch sind und dass in Kombination jede der mindestens drei ersten Oberflächen (11) und jede der mindestens drei zweiten Oberflächen (12) in einer Ebene, die durch die theoretische Achse (D0) verläuft, eine Normale besitzt, die unter dem Konuswinkel (e) in derselben Richtung wie die erste Umfangsoberfläche (31) und entsprechend die zweite Umfangsoberfläche (32) geneigt ist, derart, dass im Wesentlichen konstante Breiten von Grenzflächen (41; 42) sichergestellt sind.

15. Uhrenunterbaugruppe (10) nach einem der Ansprüche 1 bis 10, **dadurch gekennzeichnet, dass** auf Höhe der ersten Grenzfläche (41) die magnetischen oder elektrostatischen Feldlinien zu einem Zylinder, dessen Achse mit der theoretischen Achse (D0) zusammenfällt, tangential sind und unter demselben Einfallswinkel (α) in Bezug auf eine Richtung parallel zu der theoretischen Achse (D0) geneigt sind und dass auf Höhe der zweiten Grenzfläche (42) die magnetischen oder elektrostatischen Feldlinien zu einem Zylinder, dessen Achse mit der theoretischen Achse (D0) zusammenfällt, tangential sind und unter demselben Einfallswinkel (β) in Bezug auf eine Richtung parallel zu der theoretischen Achse (D0) geneigt sind.

16. Uhrenunterbaugruppe (10) nach einem der Ansprüche 1 bis 10, **dadurch gekennzeichnet, dass** das Drehteil (2) eine dritte magnetisierte oder elektrisch geladene schmalseitige Umfangsoberfläche (33) umfasst und dass die Vorrichtung (1) mindestens drei dritte magnetisierte oder entsprechend elektrisch geladene Oberflächen (13) umfasst, die sich alle gegenüber der dritten schmalseitigen Umfangsoberfläche (33) befinden, um die Zentrierung des Drehteils (2) sicherzustellen, und die um die theoretische Achse (D0) regelmäßig angeordnet sind.

17. Uhrenunterbaugruppe (10) nach einem der Ansprüche 1 bis 16, **dadurch gekennzeichnet, dass** das Drehteil (2) keinerlei axiale Drehzapfen hat.

18. Uhrenunterbaugruppe (10) nach einem der Ansprüche 1 bis 17, **dadurch gekennzeichnet, dass** das Drehteil (2) ein Tourbillon- oder Karussellgestell ist.

19. Uhrenunterbaugruppe (10) nach einem der Ansprüche 1 bis 17, **dadurch gekennzeichnet, dass** das Drehteil (2) eine Aufzug-Schwingmasse ist.

20. Uhrenunterbaugruppe (10) nach einem der Ansprüche 1 bis 17, **dadurch gekennzeichnet, dass** das Drehteil (2) ein Federhaus ist.

21. Uhrenunterbaugruppe (10) nach einem der Ansprüche 1 bis 17, **dadurch gekennzeichnet, dass** das Drehteil (2) ein Rad ist.

22. Uhrwerk (100), das mindestens eine Uhrenunterbaugruppe (10) nach einem der Ansprüche 1 bis 21 enthält, **dadurch gekennzeichnet, dass** das Werk (100) Mittel zur Isolation oder Abschirmung gegenüber einem magnetischen und/oder elektrostatischen Feld um das Drehteil (2) und die Drehführungsvorrichtung (1) umfasst.

23. Uhr (200), die mindestens ein Uhrwerk (100) nach Anspruch 23 und/oder mindestens eine Uhrenunterbaugruppe (10) nach einem der Ansprüche 1 bis 21 enthält, **dadurch gekennzeichnet, dass** sie Mittel zur Isolation oder Abschirmung gegenüber dem magnetischen und/oder elektrostatischen Feld um das Drehteil (2) und die Drehführungsvorrichtung (1) umfasst.

24. Großuhr (300), die ein Uhrwerk (100) nach Anspruch 22 und/oder mindestens eine Uhrenunterbaugruppe (10) nach einem der Ansprüche 1 bis 21 enthält, **dadurch gekennzeichnet, dass** sie Mittel zur Isolation oder Abschirmung gegenüber einem magnetischen und/oder elektrostatischen Feld um das Drehteil (2) und die Drehführungsvorrichtung (1) umfasst.

## Claims

1. Timepiece sub-assembly (10) including, on the one hand, a mobile timepiece element (2) with at least a first (31) annular peripheral surface (3) of revolution about a pivot axis (D) of said mobile element (2), and on the other hand, a device (1) for guiding pivoting about a theoretical axis (D0) of a timepiece mechanism, wherein said first peripheral surface (31) is magnetically charged, and in that said device (1) includes either a first magnetically charged ring, or at least three first magnetically charged surfaces (11), oppositely charged to said first peripheral surface (31) in order to repulse said first surface at a first interface (41), to maintain said mobile element (2) in axial levitation in the direction of said theoretical axis (DO), wherein said one mobile timepiece element (2) includes said first (31) and a second (32) magnetically charged annular peripheral surfaces (3) of revolution about the same pivot axis (D) of said mobile element (2) which are opposite to each other on either side of said mobile element (2), and wherein said device (1) includes, either a second magnetically charged ring, or at least three second magnetically charged surfaces (12), oppositely charged to said second peripheral surface (32) in order to repulse said second surface, at a second interface (42), in order to maintain said mobile element (2) in axial levitation in the direction of said theoretical axis (DO), **characterised in that** each said at least three first surfaces (11) and each site at least three second surfaces (12) includes means of emitting several magnetic fields in the same sense at the respective interface (41, 42) and in directions substantially parallel to each other, at said respective interface (41, 42), including at least a first inner field (BE1) on an inner radius (RI) with respect to said theoretical axis (D0) said inner radius (RI) has a value less than that of the mean radius (RM) of said peripheral surface (31, 32) which is opposite thereto, a second normal field (BE2) on a normal radius (RN) of equal value to said mean radius (RM), and a third outer field (BE3) on an outer radius (RE) of greater value than that of said mean radius (RM), said second normal field (BE2) being of lower intensity than that of said inner field (BE1) and than that of said outer field (BE3) so as to return said pivot axis (D) of said mobile element (2) to conformity with said theoretical axis (D0) after any disturbance experienced by said sub-assembly (10).

2. Timepiece sub-assembly (10) according to claim 1, **characterized in that** the surfaces that are magnetically charged have a remanent field of more than 0.8 Tesla.

3. Timepiece sub-assembly (10) according to claim 1 or 4, **characterized in that** said mobile element (2) is subjected, at said first peripheral surface (31), to a magnetic field which is generated by at least one electromagnet.

4. Timepiece sub-assembly (10) including, on the one hand, a mobile timepiece element (2) with at least a first (31) annular peripheral surface (3) of revolution about a pivot axis (D) of said mobile element (2), and on the other hand, a device (1) for guiding pivoting about a theoretical axis (D0) of a timepiece mechanism, wherein said first peripheral surface (31) is electrically charged, and in that said device (1) includes either a first respectively electrically charged ring, or at least three first electrically charged surfaces (11), oppositely charged to said first peripheral surface (31) in order to repulse said first surface at a first interface (41), to maintain said mobile element (2) in axial levitation in the direction of said theoretical axis (DO), wherein said one mobile timepiece element (2) includes said first (31) and a second (32) annular peripheral surfaces (3) of revolution about the same pivot axis (D) of said mobile element (2) which are opposite to each other on either side of said mobile element (2), said second peripheral surface (32) being electrically charged, and wherein said device (1) includes, either a second electrically charged ring, or at least three second electrically charged surfaces (12), oppositely charged to said second peripheral surface (32) in order to repulse said second surface, at a second interface (42), in order to maintain said mobile element (2) in axial levitation in the direction of said theoretical axis (DO), and each said at least three first surfaces (11) and each said at least three second surfaces (12) include means of emitting several electrostatic fields in the same sense at the respective interface (41, 42) and in directions substantially parallel to each other, at said respective interface (41, 42), including at least a first inner field (BE1) on an inner radius (RI) with respect to said theoretical axis (D0) said inner radius (RI) has a value less than that of the mean radius (RM) of said peripheral surface (31, 32) which is opposite thereto, a second normal field (BE2) on a normal radius (RN) of equal value to said mean radius (RM), and a third outer field (BE3) on an outer radius (RE) of greater value than that of said mean radius (RM), said second normal field (BE2) being of lower intensity than that of said inner field (BE1) and than that of said outer field (BE3) so as to return said pivot axis (D) of said mobile element (2) to conformity with said theoretical axis (D0) after any disturbance experienced by said sub-assembly (10).

5. Timepiece sub-assembly (10) according to claim 4, **characterized in that** the surfaces that are electrically charged are made with electrets.

6. Timepiece sub-assembly (10) according to one of claims 1 to 5, **characterized in that** said at least three first surfaces (11) are regularly arranged around said theoretical axis (D0).

7. Timepiece sub-assembly (10) according to one of claims 1 to 6, **characterized in that** said at least three second surfaces (12) are regularly arranged around said theoretical axis (D0).

8. Timepiece sub-assembly (10) according to one of claims 1 to 7, **characterized in that** said at least three first surfaces (11) are grouped together on a first ring along said theoretical axis (D0), and/or **in that** said at least three second surfaces (12) are grouped together on a second ring along said theoretical axis (D0).

9. Timepiece sub-assembly (10) according to one of claims 8, **characterized in that** said first peripheral surface (31) is separated from said second peripheral surface (32) by a low dielectric, with a dielectric constant of between 1 and 50 and a dielectric rigidity of more than 10 MV/m, in a median groove (34) comprised in said mobile element (2).

10. Timepiece sub-assembly (10) according to one of claims 1 to 9, **characterized in that** said first peripheral surface (31) is adjacent to said second peripheral surface (32) and **in that** said surfaces are magnetically or electrically charged with opposite polarity.

11. Timepiece sub-assembly (10) according to one of claims 1 to 10, **characterized in that** said first peripheral surface (31) and said second peripheral surface (32) are conical with respect to said pivot axis (D) at a cone angle (θ).

12. Timepiece sub-assembly (10) according to claim 1, **characterized in that** each said at least three first surfaces (11) and each said at least three second surfaces (12) has a normal in a plane passing through said theoretical axis (D0) and tilted at said same cone angle (e), in the same direction as said first peripheral surface (31) and respectively said second peripheral surface (32), in order to ensure substantially constant interface (41, 42) widths.

13. Timepiece sub-assembly (10) according to claim 1 or 5, **characterized in that** said mobile element (2) is located between upper (36) and lower (37) pole shoes, offset radially in relation to each other and with respect to a pole shoe (35) comprised in said mobile element (2), which is subjected to oblique counterbalancing fields, in order to return, when there is a radial drift, said first (31) and second (32) peripheral surfaces of said mobile element (2) substantially to the middle of the gap between said inner (RI) and outer (RE) radii of said pole shoes of said device (1), on said normal radius (RN).

14. Timepiece sub-assembly (10) according to one of claims 1 to 10, **characterized in that** said first peripheral surface (31) is part of tilted upper pole shoes (36A; 36B), and **in that** said second peripheral surface (32) is part of tilted lower pole shoes (37B; 37C), and are conical with respect to said pivot axis (D) at a cone angle (e), and **in that**, in combination, each said at least three first surfaces (11) and each said second at least three surfaces (12) has a normal in a plane passing through said theoretical axis (D0) and tilted at the same said cone angle (e), in the same direction as said first peripheral surface (31) and respectively said second peripheral surface (32), in order to ensure substantially constant interface (41, 42) widths.

15. Timepiece sub-assembly (10) according to one of claims 1 to 10, **characterized in that**, at said first interface (41), the magnetic or electrostatic field lines are tangential to a cylinder centred on said theoretical axis (D0) and obliquely incident at the same angle (α) with respect to a direction parallel to said theoretical axis (D0), and **in that**, at said second interface (42), the magnetic or electrostatic field lines are tangential to a cylinder centred on said theoretical axis (D0) and obliquely incident at the same angle (β) with respect to a direction parallel to said theoretical axis (D0).

16. Timepiece sub-assembly (10) according to one of the claims 1 to 10, **characterized in that** said mobile element (2) includes a third magnetically or respectively electrically charged peripheral edge surface (33), and **in that** said device (1) includes at last three third surfaces (13), all oppositely magnetically or respectively electrically charged to said third peripheral edge surface (33) to ensure the centring of said mobile element (2), and regularly arranged around said theoretical axis (D0).

17. Timepiece sub-assembly (10) according to one of claims 1 to 16, **characterized in that** said mobile element (2) has no axial pivots.

18. Timepiece sub-assembly (10) according to one of claims 1 to 17, **characterized in that** said mobile element (2) is a tourbillon or carousel carriage.

19. Timepiece sub-assembly (10) according to any of claims 1 to 17, **characterized in that** said mobile component (2) is an oscillating winding weight.

20. Timepiece sub-assembly (10) according to any of claims 1 to 17, **characterized in that** said mobile element (2) is a barrel.

21. Timepiece sub-assembly (10) according to any of claims 1 to 17, **characterized in that** said mobile element (2) is a wheel.

22. Timepiece movement (100) including at least one timepiece sub-assembly (10) according to any of claims 1 to 21, **characterized in that** the movement includes magnetic and/or electrostatic field insulating or shielding means around said mobile element (2) and said pivoting guide device (1).

23. Watch (200) including at least one timepiece movement (100) according to claim 23 and/or including at least one timepiece sub-assembly (10) according to one of claims 1 to 21, **characterized in that** the watch includes magnetic and/or electrostatic field insulating or shielding means around said mobile element (2) and said pivoting guide device (1).

24. Clock (300) including at least one timepiece movement (100) according to claim 22 and/or including at least one timepiece sub-assembly (10) according to one of claims 1 to 21, **characterized in that** the clock includes magnetic and/or electrostatic field insulating or shielding means around said mobile element (2) and said pivoting guide device (1).
